# EUROPEAN PATENT SPECIFICATION

(11) **EP 2 372 893 B1**
(45) Date of publication and mention of the grant of the patent: **27.06.2012**
(21) Application number: 10158605.5
(22) Date of filing: 31.03.2010
(51) Int. Cl.: H02M 7/487

(54) **Multilevel inverter**
Mehrstufiger Wechselrichter
Onduleur multiniveaux

(43) Date of publication of application: 05.10.2011
(73) Proprietor: CE+T, BE 4020 Wandre (BE)
(72) Inventor: Bleus, Paul, BE-4020, Jupille (BE); Joannes, Thierry, BE-4000, Flémalle (BE); Milstein, Francois, Be-4020, Wandre (BE)
(74) Representative: De Groote, Christophe

(56) References cited:
- EP-A1- 1 443 648
- PENG F Z: "A generalized multilevel inverter topology with self voltage balancing" INDUSTRY APPLICATIONS CONFERENCE, 2000. CONFERENCE RECORD OF THE 2000 IEEE 8-12 OCTOBER 2000, PISCATAWAY, NJ, USA,IEEE, vol. 3, 8 October 2000 (2000-10-08), pages 2024-2031, XP010521388 ISBN: 978-0-7803-6401-1
- ALIAN CHEN ET AL: "A multilevel converter topology with fault tolerant ability" 20040222; 20040222 - 20040226, vol. 3, 22 February 2004 (2004-02-22), pages 1610-1616, XP010703838 ISBN: 978-0-7803-8269-5

## Description

### Field of the invention

The invention relates to multilevel DC to AC power converters, sometimes also called inverters.

More particularly, the invention relates to an inverter module comprising:
- three DC inputs (IN1, IN2, IN3) for receiving respectively a first (V1), a second (V2) and a third (V3) DC voltage, wherein V1 > V2 > V3,
- a first (T1), a second (T2), a third (T3) and a fourth (T4) switching means, sequentially connected in series between the first (IN1) and the third (IN3) DC inputs, the second DC input (IN2) being furthermore connected to the series connection between the second (T2) and the third (T3) switching means,
- a fifth (T5) and a sixth (T6) switching means, sequentially connected in series between the series connection between the first (T1) and the second (T2) switching means on the one hand and the series connection between the third (T3) and the fourth (T4) switching means on the other hand,
- an AC output (OUT1) connected to the series connection between the fifth (T5) and the sixth (T6) switching means, for delivering an AC voltage (Va) with regard to the second DC input (IN2), and
- switch control means for controlling an ON/OFF state of each of the six switching means (T1,T2,T3,T4,T5,T6).

### Description of prior art

Such inverter modules are well known in the prior art and are sometimes referred to as "neutral point clamped (NPC) multilevel inverters". Their main advantage resides in the fact that, thanks to the use of multiple DC input voltages (more than two), to the particular arrangement of the switching means, and to the particular control of these switching means, mid- to high DC input voltages can be converted to AC without any of the individual switching means (T1,T2,T3,T4,T5,T6) having to withstand such mid- to high DC voltages at any time.

A generalized inverter of such a nature has been disclosed by Fang Z. Peng in "A generalized multilevel inverter topology with self voltage balancing " (IEEE Trans. Ind. Applicat., vol. 37, pp. 611-618, Mar./Apr. 2001). This document discloses for example a three-level inverter module whose circuit topology, as far as the switches are concerned, is the same as the topology of an inverter module according to the present invention.

Although such known inverter modules work well, there is a need for improving their overall efficiency when converting DC power to AC power.

### Summary of the invention

It is an object of the invention to provide an inverter module which has a higher overall efficiency compared to the known inverter modules.

To this end, the inverter module according to the invention is characterised in that the switch control means is configured in such a way that:
- for outputting a positive alternation at the AC output (OUT1), T3 and T4 and T6 are all switched OFF, T5 is switched ON, and T1 and T2 are switched ON and OFF several times in a complementary fashion,
   and in such a way that
- for outputting a negative alternation at the AC output (OUT1), T1 and T2 and T5 are all switched OFF, T6 is switched ON, and T3 and T4 are switched ON and OFF several times in a complementary fashion.

Indeed, when such an inverter module is put into operation for converting the DC input voltages to the AC output voltage, T5 will only be switched ON and OFF once in the course of a full cycle period of the AC output voltage, whereas, with known inverter modules, T5 will be switched ON and OFF several times in the course of said cycle period (usually a very large number of times). The same holds for T6.

In other terms, with an inverter module according to the invention, T5 and T6 will exclusively be switched ON and OFF at a fundamental frequency (first order frequency) which is to be delivered at the AC output, whereas, with prior art inverter modules, T5 and T6 are regularly switched ON and OFF at (much) higher frequencies.

Hence, switching losses in T5 and in T6 are reduced compared to known inverters. This solution therefore contributes to increasing the overall efficiency of the inverter module compared to the known ones.

Preferably, the inverter module according to the invention is characterised in that the first, the second, the third and the fourth switching means (T1,T2,T3,T4) are semiconductor devices having first specifications and in that the fifth (T5) and the sixth (T6) switching means are semiconductor devices having second specifications, different from the first specifications.

By using semiconductor devices of different types for T5 and T6 on the one hand versus for T1,T2,T3 and T4 on the other hand (i.e. devices having different specifications as shown on their data sheet), one can indeed select devices which are optimized for their respective specific switching frequency.

More preferably, the inverter module according to the invention is characterised in that each of the fifth (T5) and the sixth (T6) switching means presents an intrinsic conduction loss which is lower than an intrinsic conduction loss of each of the first (T1), the second (T2), the third (T3) and the fourth (T4) switching means.

By "intrinsic conduction loss" it must be understood the conduction loss which intrinsically derives from the semiconductor device as such (i.e. as deriving from its data sheet specifications).

Hence, conduction losses in T5 and T6 will be reduced, thereby further increasing the overall efficiency of the inverter module compared to the known ones.

### Short description of the drawings

These and further aspects of the invention will be explained in greater detail by way of example and with reference to the accompanying drawings in which :
- Fig.1: schematically shows an inverter module according to the invention;
- Fig.2: shows a switching table for the inverter module of Fig.1;
- Fig.3: shows typical waveforms of the control signals and of the output voltage of the inverter module of Fig.1;
- Fig.4: shows an exemplary embodiment of the inverter module of Fig.1;
- Fig.5: shows an exemplary embodiment of an application of the inverter module of Fig.4;
- Fig.6: schematically shows a five-level inverter according to the invention;
- Fig.7: shows typical waveforms of the control signals and of the output voltage of the five-level inverter of Fig.6;
- Fig.8: schematically shows a nine-level inverter according to the invention;
- Fig.9: schematically shows a three-level three-phase inverter according to the invention;

The figures are not drawn to scale. Generally, identical components are denoted by the same reference numerals in the figures.

### Detailed description of preferred embodiments

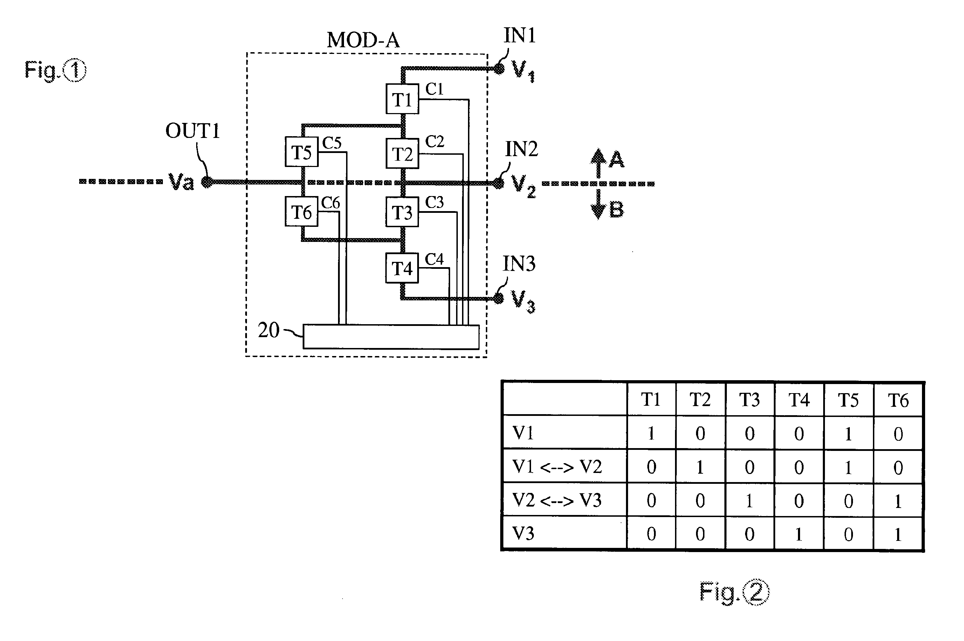

Fig.1 is a bloc diagram schematically showing an inverter module according to the invention. It comprises six switching means (T1 to T6), interconnected as shown on the figure, three DC inputs (IN1, IN2, IN3) for respectively receiving three DC voltages (V1, V2, V3) which are such that V1 > V2 > V3, an AC output (OUT1) for delivering an AC voltage (Va), and a switch control means for controlling an ON/OFF state of each of the six switching means (T1 to T6) via switch control lines (CT1 to CT6) carrying switch control signals (C1 to C6).
As such, this circuit topology is well known from the prior art so that it will not be described in further detail here.

Of interest here is the way the ON/OFF state of the switching means are controlled by the switch control means. To this end, Fig.2 shows a switching table for the inverter module of Fig.1 according to the invention.

This table shows how the ON/OFF state of each of the six switching means is set by the switch control means, depending on whether either V1, V2 or V3 are to be output to the AC output (OUT1). The two middle lines of the table moreover make a distinction between the AC output having to change between V1 and to V2 or between V2 and V3. A logical 1 in the table corresponds to an ON state of a switching means whereas a logical O corresponds to an OFF state of a switching means.

One can for example easily read from this table that, in order to bring the AC output substantially to the V1 level, T5 and T1 are both switched ON, whereas T2,T3,T4 and T6 are all switched OFF. To bring then the AC output substantially from the V1 level to the V2 level, T5 is kept ON, T1 is switched OFF, T2 is switched ON, whereas T3,T4 and T6 are all kept switched OFF.

The generation of positive and negative alternations at the AC output is based on the switching rules of this table.

### Moreover :

■ for providing a positive alternation at the AC output (OUT1) with regard to the second DC input (IN2), T5 is switched ON, T1 and T2 are switched ON and OFF several times in a complementary fashion (i.e. if T1 is ON then T2 is OFF and vice-versa), whereas T3,T4 and T6 are kept switched OFF,
   and
■ for providing a negative alternation at the AC output (OUT1) with regard to the second DC input (IN2), T6 is switched ON, T3 and T4 are switched ON and OFF several times in a complementary fashion (i.e. if T3 is ON then T4 is OFF and vice-versa), whereas T1,T2 and T5 are kept switched OFF.

Hence, during a full cycle period (Ta = 1/Fa) of the AC voltage (Va), T5 is only switched ON and OFF once, and T6 is only switched ON and OFF once, whereas each of T1,T2,T3 and T4 are switched ON and OFF several times.

Preferably, V2 = (V1-V3)/2, so that the positive and negative alternations of the AC voltage (Va) at the AC output are balanced.

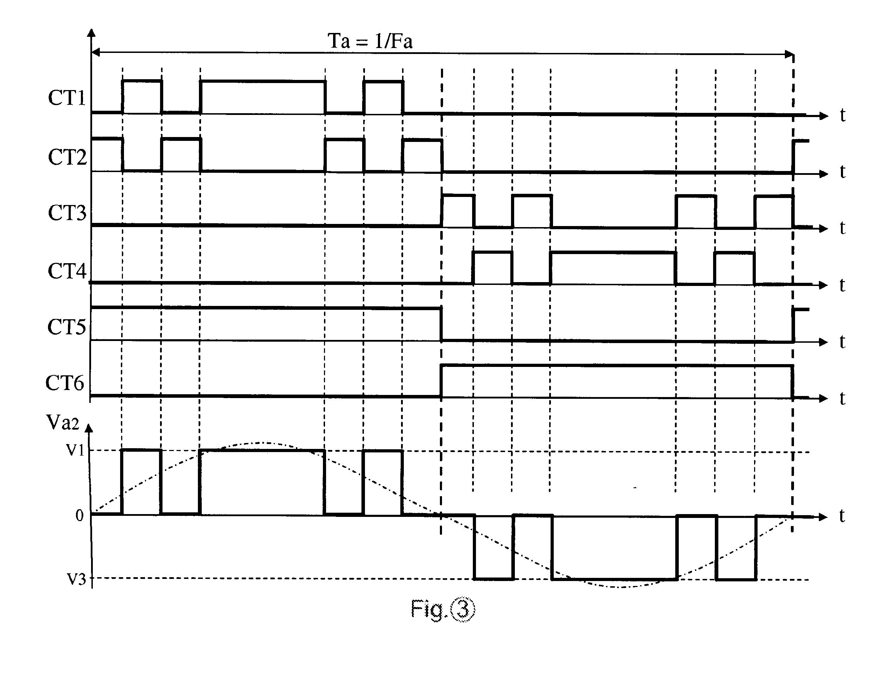

Fig.3 shows exemplary waveforms of the switch control signals (CT1 to CT6) generated by the switch control means and of the resulting AC voltage (Va) at the AC output (OUT1) of the inverter module of Fig.1, when controlled according to the invention.

On this figure, Va is shown relative to V2 (noted Va2) because the AC output is taken between OUT1 and IN2.

Waveforms are only shown over a first full cycle period (Ta = 1/Fa) of Va . The subsequent cycle periods may be identical to or different from said first full cycle period, depending on whether or not Va is to be periodical. Preferably, all cycle periods are substantially identical.

The positive alternation (when Va is higher than V2) does not necessarily have to last for the same period of time (Ta/2) as the negative alternation (when Va is lower than V2) : it may cover a longer (> Ta/2) or a shorter (< Ta/2) period of time according to the desired waveform for Va.

It must also be understood that, in a practical implementation, some brief dead time may be inserted by the switch control means between the switch control signals in order that two switching means in a complementary pair (T1/T2, T3/T4, T5/T6) may both be switched ON or both be switched OFF for a small amount of time during a transition, without departing from the scope of the present invention.

In this example, T1 is switched ON and OFF three times during the positive alternation and T3 is switched ON and OFF three times during the negative alternation.

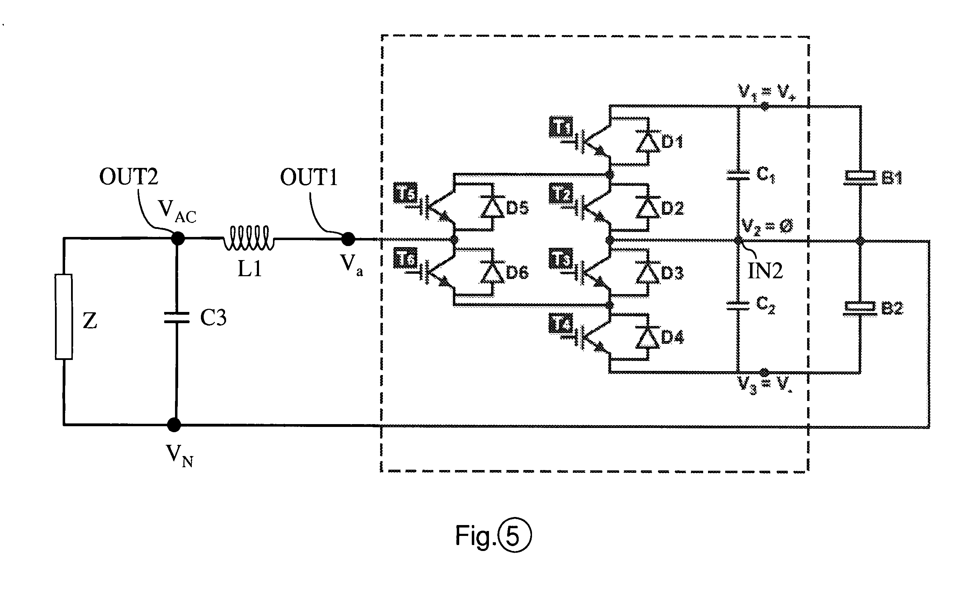

Preferably, the switch control means switches T1 and/or T3 ON and OFF at frequencies which are much higher than the desired fundamental frequency (Fa = 1/Ta)) of Va at the AC output because this allows to make use of smaller filtering devices at the AC output (such as for example a smaller self L1 as shown on Fig.5).

The fundamental frequency (Fa) at the AC output may typically have a value comprised between 1 Hz and 1 KHz, whereas T1 and/or T3 may typically be switched ON and OFF at a frequency between 1 KHz and 500 KHz. T1 and/or T3 may for example be switched ON and OFF at 15 KHz for a fundamental AC output frequency (Fa) of 50 Hz.

Moreover, T1 and/or T3 may be switched ON and OFF according to well known PWM schemes or any other appropriate scheme.

The switching means are preferably actively controllable semiconductor devices, such as for example transistor-type or thyristor-type devices.
Preferably, the semiconductor devices chosen for T1,T2,T3 and T4 are different than the semiconductor devices chosen for T5 and T6. One may for example select to use the following combinations of semiconductor devices:
- T1,T2,T3,T4 :: Insulated Gate Bipolar Transistors (IGBT) of a first type, and
- T5, T6 :: Insulated Gate Bipolar Transistors (IGBT) of a second type, different from the first type (according to their data sheet);
or
- T1,T2,T3,T4 :: Insulated Gate Bipolar Transistors (IGBT), and
- T5, T6 :: Integrated Gate Commutated Thyristors (IGCT),
or
- T1,T2,T3,T4 :: Metal Oxide Sem. Field Effect Transistor (MOSFET), and
- T5, T6 :: Integrated Gate Commutated Thyristors (IGCT),
or
- T1,T2,T3,T4 :: Integrated Gate Commutated Thyristors (IGCT), and
- T5, T6 :: Gate Turn Off Thyristor (GTO).

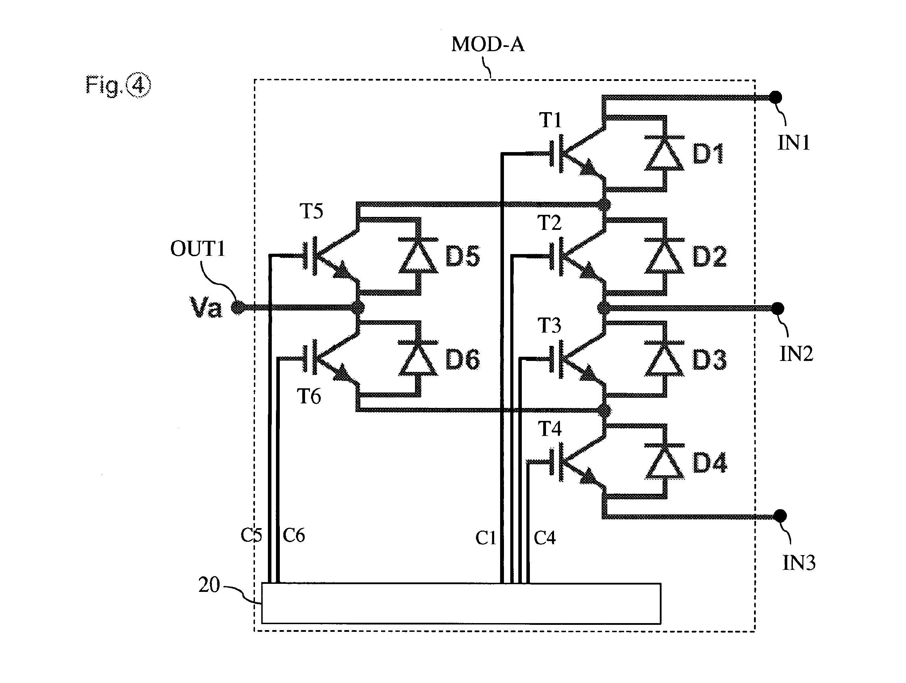

Fig.4 shows an exemplary embodiment of an inverter module wherein Insulated Gate Bipolar Transistors (IGBT) are being used, each IGBT (T1 to T6) being respectively provided with a freewheel diode (D1 to D6) mounted in anti-parallel to each IGBT.

Preferably, the semiconductor devices which are used for T5 and T6 have lower intrinsic conduction losses than the intrinsic conduction losses of the devices which are used for T1,T2,T3 and T4. As is well known for the skilled person, the intrinsic conduction losses of a semiconductor device mainly depend on its forward voltage drop and on its on-state resistance, both being generally mentioned on the data sheet accompanying the device. Methods for calculating or for measuring the conduction losses of a semiconductor device are also well known.

Most preferably, T1,T2,T3 and T4 are transistor-type devices, such as IGBTs for example, whereas T5 and T6 are thyristor-type devices, such as IGCTs for example.

Fig.5 shows an exemplary embodiment of an application of the inverter module of Fig.4. In this example, two batteries (B1, B2) and two parallel buffer capacitors (C1,C2) are connected to the DC inputs of the inverter module for applying the three DC voltages (V1, V2, V3) as shown. A low-pass filter (L1,C3) is connected to the AC output (OUT1) of the inverter module for filtering out the higher order frequencies of Va according to well-known filtering methods. For the sake of clarity, the switch control means are not shown on this figure.
An AC load (Z) is connected between an output of the low-pass filter (OUT2) and the second DC input (IN2).
Hence, when such system is put into operation, the DC voltage of the batteries will for example be converted into a substantially sinusoidal AC voltage (V_{AC}) with regard to V2 (=V_{N}).

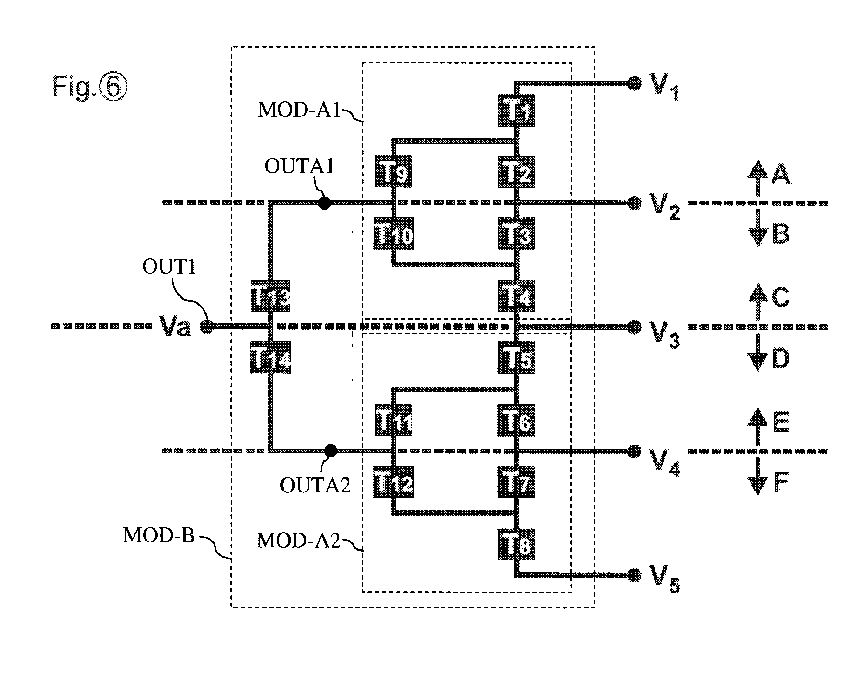

Fig.6 schematically shows a five-level inverter according to the invention. For clarity reasons, the switch control means and the switch control lines are not shown on this figure but it must be understood that they are analogue to those shown in Fig.1, i.e. switch control line Ci controls the ON/OFF switching of Ti and switch control signal CTi is the signal delivered by the switch control means to switch control line Ci. It is also to be noted that dotted line segments shown on Fig.6 do not represent electrical connections but rather topological axes of symmetry.

Such a five-level inverter comprises two three-level inverter modules (MOD-A1, MOD-A2), each of these two modules being a basic three-level module (MOD-A) designed and controlled as described hereinabove. The third DC input of the first inverter module (MOD-A1) is connected to the first DC input of the second inverter module (MOD-A2), so that the inverter presents five DC inputs for receiving respectively five DC voltages (V1 to V5) which are such that V1 > V2 > V3 > V4 > V5 .

Preferably, V3=(V1+V5)/2, V2=(V1+V3)/2, and V4=(V3+V5)/2.

Moreover, two additional switching means (T13,T14) are connected in series between the first AC output (OUT-A1) of the first inverter module (MOD-A1) and the second AC output (OUT-A2) of the second inverter module (MOD-A2), the mid-point between T13 and T14 being the AC output (OUT1) of this inverter.

For generating a positive alternation at the AC output (OUT1) with regard to the third DC input (i.e. with regard to V3), T13 is switched ON, whereas T14 as well as T11,T12,T5,T6,T7 and T8 are switched OFF, and whereas T9,T10,T1,T2,T3 and T4 are switched ON and OFF according to the scheme of Fig. 2 and Fig.3 for delivering V1 or V2 or V3 to the AC output.

For generating a negative alternation at the AC output (OUT1) with regard to the third DC input (i.e. with regard to V3), T14 is switched ON, whereas T13 as well as T9,T10, T1,T2,T3 and T4 are switched OFF, and whereas T11,T12,T5,T6,T7 and T8 are switched ON and OFF according to the scheme of Fig. 2 and Fig.3 for delivering V3 or V4 or V5 to the AC output.

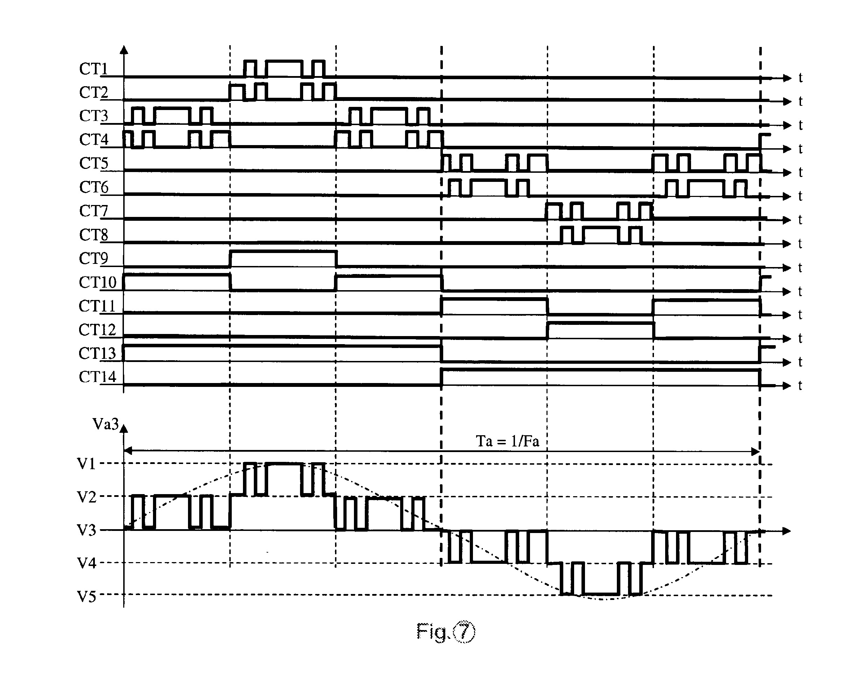

Fig.7 shows exemplary waveforms of the switch control signals (CT1 to CT14) and of the resulting AC voltage (Va) at the AC output (OUT1) of the five-level inverter of Fig.6, when controlled according to the invention.

It will now also be clear for the skilled person how to build and control multilevel inverters presenting 2ⁿ+1 levels (two to the power "n" plus one) where n = 1,2,3,4, .... The present invention therefore concerns any and all of these multilevel inverters.

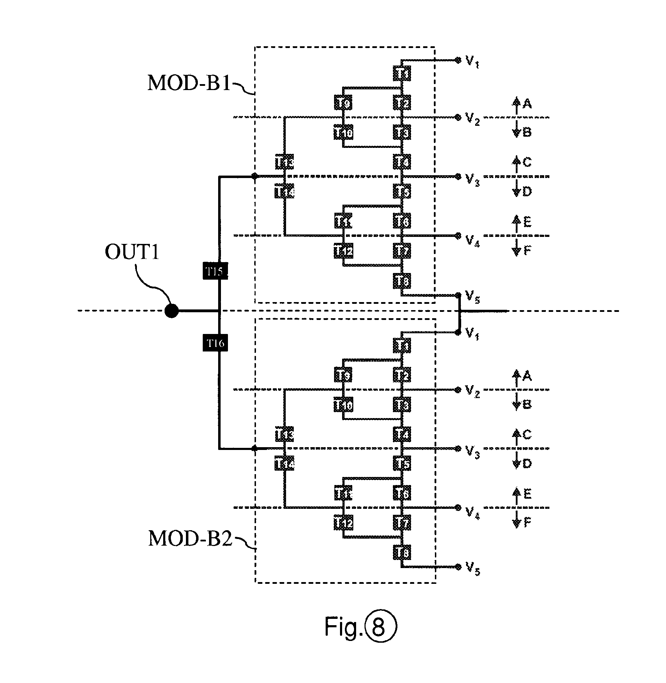

A schematic example of a nine-level inverter (n=3) comprising two five-level inverters (MOD-B1, MOD-B2) as described hereinabove is shown on Fig. 8.

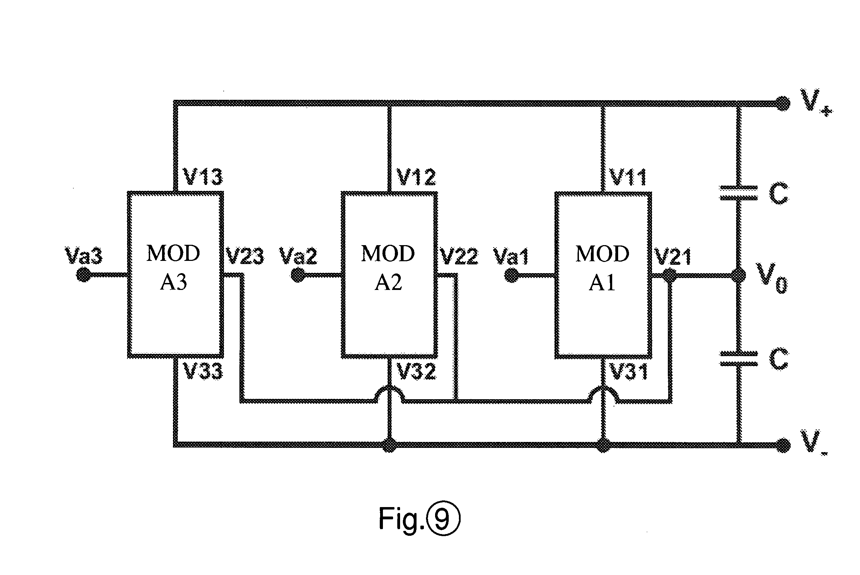

Fig.9 schematically shows a three-level three-phase inverter according to the invention. It comprises three inverter modules (MOD-A1, MOD-A2, MOD-A3) constituting the three phase legs, each module being one of those described hereinabove (MOD-A). The first DC inputs (V11,V12,V13) and the third DC inputs (V31,V32,V33) of each module are connected to a DC rail (V+, V-) as shown on the figure, whereas the second DC inputs (V21,V22,V23) of each module are connected to a mid-point of a capacitor bank (C,C) as shown on the figure. Provided the switch control signals (not shown) are phase-shifted by 120 degrees for each of the three inverter modules (i.e. for each phase leg), a three-phase AC voltage will be delivered at the outputs (Val, Va2, Va3), with an eventual neutral point taken at the mid-point of the capacitor bank (Vo).

The present invention has been described in terms of specific embodiments, which are illustrative of the invention and not to be construed as limiting. More generally, it will be appreciated by persons skilled in the art that the present invention is not limited by what has been particularly shown and/or described hereinabove. The invention resides in each and every novel characteristic feature and each and every combination of characteristic features.
Reference numerals in the claims do not limit their protective scope.
Use of the verbs "to comprise", "to include", "to be composed of", or any other variant, as well as their respective conjugations, does not exclude the presence of elements other than those stated.
Use of the article "a", "an" or "the" preceding an element does not exclude the presence of a plurality of such elements.

Summarized, the invention may also be described as follows: a multilevel DC to AC power converter comprising three DC inputs (IN1, IN2, IN3) for receiving respectively three DC voltages (V1,V2,V3) wherein V1 > V2 > V3 , one AC output (OUT1) for delivering an AC voltage (Va), a set of at least six switching means (T1,T2,T3,T4,T5,T6) arranged in a symmetric pyramidal fashion as shown in Fig.1, and switch control means for controlling an ON/OFF state of each of the six switching means. The switch control means is configured in such a way that the top two switching means (T5,T6) are switched ON and OFF in a complementary fashion and exclusively at a fundamental frequency (Fa) of the AC voltage to be delivered at the AC output (OUT1), whereas at least some of the other four switching means (T1,T2,T3,T4) are switched ON and OFF at higher frequencies. The top two switching means (T5,T6) are hence subject to lower switching losses, thereby increasing the overall efficiency of the converter.

## Claims

1. Inverter module comprising
- three DC inputs (IN1, IN2, IN3) for receiving respectively a first (V1), a second (V2) and a third (V3) DC voltage, wherein V1 > V2 > V3,
- a first (T1), a second (T2), a third (T3) and a fourth (T4) switching means, sequentially connected in series between the first (IN1) and the third (IN3) DC inputs, the second DC input (IN2) being furthermore connected to the series connection between the second (T2) and the third (T3) switching means,
- a fifth (T5) and a sixth (T6) switching means, sequentially connected in series between the series connection between the first (T1) and the second (T2) switching means on the one hand and the series connection between the third (T3) and the fourth (T4) switching means on the other hand,
- an AC output (OUT1) connected to the series connection between the fifth (T5) and the sixth (T6) switching means, for delivering an AC voltage (Va) with regard to the second DC input (IN2),
- switch control means for controlling an ON/OFF state of each of the six switching means (T1, T2, T3, T4, T5, T6),
**characterized in that**
the switch control means is configured in such a way that
- for outputting a positive alternation at the AC output (OUT1), T3 and T4 and T6 are all switched OFF, T5 is switched ON, and T1 and T2 are switched ON and OFF several times in a complementary fashion, and in such a way that
- for outputting a negative alternation at the AC output (OUT1), T1 and T2 and T5 are all switched OFF, T6 is switched ON, and T3 and T4 are switched ON and OFF several times in a complementary fashion.

2. Inverter module according to claim 1, **characterized in that** the first, the second, the third and the fourth switching means (T1, T2, T3, T4) are semiconductor devices having first specifications and **in that** the fifth (T5) and the sixth (T6) switching means are semiconductor devices having second specifications, different from the first specifications.

3. Inverter module according to claim 2, **characterized in that** each of the fifth (T5) and the sixth (T6) switching means presents an intrinsic conduction loss which is lower than an intrinsic conduction loss of each of the first (T1), the second (T2), the third (T3) and the fourth (T4) switching means.

4. Inverter module according to claim 3, **characterized in that** the fifth (T5) and the sixth (T6) switching means are thyristor-type semiconductors, and **in that** the first (T1), the second (T2), the third (T3) and the fourth (T4) switching means are transistor-type semiconductors.

5. Inverter comprising at least two inverter modules according to anyone of preceding claims.

6. Three-phase inverter comprising three legs, each leg comprising at least one inverter module according to anyone of claims 1 to 4.

## Patentansprüche

1. Wechselrichtermodul mit:
- drei Gleichstromeingängen (IN1, IN2, IN3) zur jeweiligen Aufnahme einer ersten (V1), einer zweiten (V2) und einer dritten (V3) Gleichspannung, wobei V1 > V2 > V3 ist,
- einem ersten (T1), einem zweiten (T2), einem dritten (T3) und einem vierten (T4) Schaltmittel, die nacheinander in Reihe zwischen dem ersten (IN1) und dem dritten (IN3) Gleichstromeingang geschaltet sind, wobei der zweite Gleichstromeingang (IN2) ferner an die Reihenschaltung zwischen dem zweiten (T2) und dem dritten (T3) Schaltmittel geschaltet ist,
- einem fünften (T5) und einem sechsten (T6) Schaltmittel, die nacheinander in Reihe zwischen der Reihenschaltung zwischen dem ersten (T1) und dem zweiten (T2) Schaltmittel einerseits und der Reihenschaltung zwischen dem dritten (T3) und dem vierten (T4) Schaltmittel andererseits geschaltet sind,
- einem Wechselstromausgang (OUT1), der an die Reihenschaltung zwischen dem fünften (T5) und dem sechsten (T6) Schaltmittel geschaltet ist, um eine Wechselspannung (Va) bezüglich des zweiten Gleichstromeingangs (IN2) zu liefern,
- ein Schaltsteuerungsmittel zum Steuern eines AN/AUS-Zustandes eines jeden der sechs Schaltmittel (T1, T2, T3, T4, T5, T6),
**dadurch gekennzeichnet, dass**
das Schaltsteuerungsmittel derart eingerichtet ist, dass
- zur Ausgabe einer positiven Halbwelle am Wechselstromausgang (OUT1) T3 und T4 und T6 alle auf AUS geschaltet werden, T5 auf AN geschaltet wird und T1 und T2 mehrfach einander abwechselnd auf AN und AUS geschaltet werden, und derart dass
- zur Ausgabe einer negativen Halbwelle am Wechselstromausgang (OUT1) T1 und T2 und T5 alle auf AUS geschaltet werden, T6 auf AN geschaltet wird und T3 und T4 mehrfach einander abwechselnd auf AN und AUS geschaltet werden.

2. Wechselrichtermodul nach Anspruch 1, **dadurch gekennzeichnet, dass** das erste, das zweite, das dritte und das vierte Schaltmittel (T1, T2, T3, T4) Halbleiterbauelemente sind, die erste Kenndaten aufweisen, und dass das fünfte (T5) und das sechste (T6) Schaltmittel Halbleiterbauelemente sind, die zweite Kenndaten aufweisen, die sich von den ersten Kenndaten unterscheiden.

3. Wechselrichtermodul nach Anspruch 2, **dadurch gekennzeichnet, dass** jedes von dem fünften (T5) und dem sechsten (T6) Schaltmittel einen Eigenleitungsverlust aufweist, der geringer ist als ein Eigenleitungsverlust eines jeden von dem ersten (T1), dem zweiten (T2), dem dritten (T3) und dem vierten (T4) Schaltmittel.

4. Wechselrichtermodul nach Anspruch 3, **dadurch gekennzeichnet, dass** das fünfte (T5) und das sechste (T6) Schaltmittel Halbleiter vom Thyristor-Typ sind und dass das erste (T1), das zweite (T2), das dritte (T3) und das vierte (T4) Schaltmittel Halbleiter vom Transistor-Typ sind.

5. Wechselrichter mit mindestens zwei Wechselrichtermodulen nach einem der vorhergehenden Ansprüche.

6. Dreiphasen-Wechselrichter mit drei Strängen, wobei jeder Strang mindestens ein Wechselrichtermodul nach einem der Ansprüche 1 bis 4 aufweist.

## Revendications

1. Module onduleur comportant
- trois entrées DC (IN1, IN2, IN3) pour recevoir respectivement une première (V1), une deuxième (V2) et une troisième (V3) tension DC, telles que V1 > V2 > V3,
- des premiers (T1), des seconds (T2), des troisièmes (T3) et des quatrièmes (T4) moyens de commutation connectés séquentiellement et en série entre la première (IN1) et la troisième (IN3) entrée DC, la seconde entrée DC (IN2) étant par ailleurs connectée à la connexion série entre les seconds (T2) et les troisièmes (T3) moyens de commutation,
- des cinquièmes (T5) et des sixièmes (T6) moyens de commutation connectés séquentiellement et en série entre la connexion série entre les premiers (T1) et les seconds (T2) moyens de commutation d'une part et la connexion série entre les troisièmes (T3) et des quatrièmes (T4) moyens de commutation d'autre part,
- une sortie AC (OUT1) connectée à la connexion série entre les cinquièmes (T5) et des sixièmes (T6) moyens de commutation pour délivrer une tension AC (Va) par rapport à la deuxième entrée DC (IN2),
- des moyens de contrôle de commutation pour contrôler un état allumé/éteint de chacun des six moyens de commutation (T1, T2, T3, T4, T5, T6),
**caractérisé en ce que** les moyens de contrôle de commutation sont configurés de telle manière à ce que
- pour sortir une alternance positive à la sortie AC (OUT1), T3 et T4 et T6 sont tous éteints, T5 est allumé, et T1 et T2 sont allumés et éteints plusieurs fois d'une manière complémentaire,
et de telle manière à ce que
- pour sortir une alternance négative à la sortie AC (OUT1), T1 et T2 et T5 sont tous éteints, T6 est allumé, et T3 et T4 sont allumés et éteints plusieurs fois d'une manière complémentaire.

2. Module onduleur selon la revendication 1, **caractérisé en ce que** les premiers (T1), les seconds (T2), les troisièmes (T3) et les quatrièmes (T4) moyens de commutation sont des composants semiconducteurs ayant des premières caractéristiques et **en ce que** les cinquièmes (T5) et les sixièmes (T6) moyens de commutation sont des composants semiconducteurs ayant des secondes caractéristiques, différentes des premières caractéristiques.

3. Module onduleur selon la revendication 2, **caractérisé en ce que** chacun des cinquièmes (T5) et sixièmes (T6) moyens de commutation présentent une perte par conduction intrinsèque qui est inférieure à une perte par conduction intrinsèque de chacun des premiers (T1), des seconds (T2), des troisièmes (T3) et des quatrièmes (T4) moyens de commutation.

4. Module onduleur selon la revendication 3, **caractérisé en ce que** les cinquièmes (T5) et sixièmes (T6) moyens de commutation sont des semiconducteurs du type thyristor, et **en ce que** les premiers (T1), les seconds (T2), les troisièmes (T3) et les quatrièmes (T4) moyens de commutation sont des semiconducteurs du type transistor.

5. Onduleur comportant au moins deux modules onduleur selon l'une quelconque des revendications précédentes.

6. Onduleur triphasé comportant trois branches, chaque branche comportant au moins un module onduleur selon l'une quelconque des revendications 1 à 4.
